# EUROPÄISCHE PATENTSCHRIFT

(11) **EP 1 646 917 B1**
(45) Veröffentlichungstag und Bekanntmachung des Hinweises auf die Patenterteilung: **26.03.2008**
(21) Anmeldenummer: 04738825.1
(22) Anmeldetag: 24.06.2004
(51) Int. Cl.: G05B 19/042

(54) **VERFAHREN ZUM ERZEUGEN EINER EINE SPEZIFISCHE AUTOMATISIERUNGSANLAGE BESCHREIBENDEN STRUKTURDARSTELLUNG**
METHOD FOR GENERATING A STRUCTURE REPRESENTATION WHICH DESCRIBES A SPECIFIC AUTOMATION SYSTEM
PROCEDE POUR GENERER UNE REPRESENTATION DE STRUCTURE DECRIVANT UNE INSTALLATION D'AUTOMATISATION SPECIFIQUE

(30) Priorität: 22.07.2003 DE 10333889
(43) Veröffentlichungstag der Anmeldung: 19.04.2006
(73) Patentinhaber: SIEMENS AKTIENGESELLSCHAFT, 80333 München (DE)
(72) Erfinder: DIETRICH, Fabian, 90480 Nürnberg (DE); HIEBER, Bernd, 91074 Herzogenaurach (DE); JACHMANN, Thomas, 90475 Nürnberg (DE); RÜCKL, Uwe, 13591 Berlin (DE); WOICIECHOWSKY, Thomas, 91257 Pegnitz (DE)
(86) Internationale Anmeldenummer: PCT/DE2004/001379
(87) Internationale Veröffentlichungsnummer: WO 2005/010625

(56) Entgegenhaltungen:
- WO-A-02/31607
- WO-A-03/036400
- DE-A1- 10 132 036
- DE-A1- 19 834 943
- US-B1- 6 195 591
- CLARK, J.; DEROSE, S.: "XML Path Language (XPath) - Version 1.0" INTERNET ARTICLE, [Online] 16. November 1999 (1999-11-16), XP002342333 Gefunden im Internet: URL:http://www.w3.org/TR/xpath> [gefunden am 2005-08-25]

## Beschreibung

Die Erfindung betrifft ein Verfahren zum automatischen Erzeugen einer eine spezifische Automatisierungsanlage beschreibenden Strukturdarstellung aus einer eine allgemeine Automatisierungsanlage beschreibenden Modellstrukturdarstellung, wobei die Modellstrukturdarstellung eine strukturierte Darstellung von Funktionsgruppen der allgemeinen Automatisierungsanlage und deren Verknüpfungen untereinander aufweist und jeder Funktionsgruppe eine oder mehrere Komponenten der spezifischen Automatisierungsanlage zuordenbar sind.

Zum Steuern und Überwachen automatisierter Prozesse werden heutzutage üblicherweise sogenannte Automatisierungsanlagen eingesetzt. Bei den automatisierten Prozessen kann es sich beispielsweise um verfahrenstechnische Prozesse, automatisierte Herstellungsverfahren oder auch Erzeugungs- und Verteilungssysteme für elektrische Energie handeln. Eine Automatisierungsanlage umfasst üblicherweise mit dem automatisierten Prozess verbundene, in Prozessnähe angeordnete Feldgeräte, die mittels geeigneter Sensoren, wie beispielsweise Strom- und Spannungswandlern, Durchflussmessern oder Konzentrationsmessgeräten, bestimmte Messdaten aus dem Prozess gewinnen (z.B. Ströme, Spannungen, Massenströme, Konzentrationen). Auf der Grundlage dieser Messdaten kann eine Überwachung und Steuerung des Prozesses erfolgen. Beispielsweise können die Messdaten an geeignete Ausgabegeräte, wie z.B. Bildschirmanzeigen, weitergeleitet und dort etwa in Form von Grafiken oder Tabellen dem Bedienpersonal des jeweiligen Prozesses dargestellt werden. Handelt es sich bei den Feldgeräten um sogenannte elektrische Schutzgeräte, so werden üblicherweise die erfassten Messdaten automatisch auf die Einhaltung bestimmter Betriebsparameter überprüft und, sofern die vorgegebenen Betriebsparameter nicht eingehalten werden, automatisch eine geeignete Schutzmaßnahme getroffen, wie beispielsweise das Öffnen eines Leistungsschalters in einem elektrischen Energieverteilungssystem.

Üblicherweise werden solche Automatisierungsanlagen von Datenverarbeitungseinrichtungen gesteuert, die mit Hilfe einer geeigneten Steuersoftware alle für die Steuerung und Überwachung notwendigen Schritte durchführen können. Dazu müssen eine solche Datenverarbeitungseinrichtung und die entsprechende Steuersoftware unter anderem genau an die Struktur bzw. den Aufbau der jeweiligen spezifischen Automatisierungsanlage des entsprechenden zu automatisierenden Prozesses angepasst werden. Eine solche Anpassung erfolgt heutzutage meist schon im Programmierstadium der entsprechenden Steuersoftware für die Datenverarbeitungseinrichtung einer jeweiligen spezifischen Automatisierungsanlage, so dass den Programmierern und Entwicklern dieser Steuersoftware der Aufbau der spezifischen Automatisierungsanlage schon bereits zum Programmierzeitpunkt bekannt sein muss.

Aus der deutschen Offenlegungsschrift DE 100 53 665 A1 ist beispielsweise ein Prozessleitsystem bzw. eine Automatisierungsanlage zur Fernüberwachung und Steuerung von verfahrenstechnischen Prozessen bekannt. Bei dem aus der Offenlegungsschrift bekannten Prozessleitsystem wird für die Anzeige der Messdaten und zur Bedienung des Prozessleitsystems ein an einer zentralen Stelle der Datenverarbeitungseinrichtung abgelegtes Prozessbild verwendet, das die spezielle Struktur der Automatisierungsanlage des entsprechenden Prozesses beinhaltet. Dieses Prozessbild ist bereits vor der Inbetriebnahme der Automatisierungsanlage manuell erstellt und an der zentralen Stelle der Datenverarbeitungseinrichtung abgespeichert worden. Bei jeglichen Änderungen der Automatisierungsanlage muss auch dieses Prozessbild entsprechend angepasst werden.

Außerdem ist aus der deutschen Offenlegungsschrift DE 198 34 943 A1 ein Automatisierungssystem bekannt, bei dem automatisch bei einem Neustart des Automatisierungssystems dessen Funktionsbauteile in der Reihenfolge ihres programmgemäßen Aufrufs in einer Adressliste eingetragen werden, aus der weitere Listen, wie Struktur- und Meldelisten, erzeugt werden können.

Der Erfindung liegt die Aufgabe zugrunde, ein Verfahren anzugeben, mit dem vergleichsweise einfach eine Steuersoftware für eine Datenverarbeitungseinrichtung einer spezifischen Automatisierungsanlage geschaffen werden kann.

Diese Aufgabe wird erfindungsgemäß durch ein Verfahren der oben genannten Art gelöst, bei dem folgende Schritte durchgeführt werden:
- Bereitstellen einer die Modellstrukturdarstellung wiedergebenden Textdatei für eine die spezifische Automatisierungsanlage steuernde Datenverarbeitungseinrichtung, wobei die Textdatei Informationen über die in der Modellstrukturdarstellung enthaltenen Funktionsgruppen enthält und der Datenverarbeitungseinrichtung zur Verfügung gestellt wird;
- Ermitteln derjenigen Komponenten der spezifischen Automatisierungsanlage durch die Datenverarbeitungseinrichtung, die gemeinsam einer Funktionsgruppe der Modellstrukturdarstellung zuordenbar sind, indem
   - die Datenverarbeitungseinrichtung eine elektronische Anfrage an die jeweils einer Funktionsgruppe zugeordneten Komponenten oder eine diesen übergeordnete gemeinsame Steuereinrichtung sendet und
   - die jeweiligen Komponenten oder die diesen übergeordnete gemeinsame Steuereinrichtung auf diese elektronische Anfrage eine elektronische Antwort an die Datenverarbeitungseinrichtung mit einem für sie jeweils eindeutigen Erkennungsschlüssel senden, wobei jeweils einer Funktionsgruppe der Modellstrukturdarstellung gemeinsam zuordenbare Komponenten der spezifischen Automatisierungsanlage beim Senden der elektronischen Antwort Erkennungsschlüssel desselben Typs verwenden;
und
- Eintragen der ermittelten Komponenten mittels der Datenverarbeitungseinrichtung anhand ihrer Erkennungsschlüssel in die Textdatei unter Erzeugen der die spezifische Automatisierungsanlage beschreibenden Strukturdarstellung.

Der wesentliche Vorteil des erfindungsgemäßen Verfahrens liegt darin, dass keine manuelle individuelle Anpassung der Software für die die spezifische Automatisierungsanlage steuernde Datenverarbeitungseinrichtung an die spezifische Automatisierungsanlage vorgenommen werden muss. Gemäß dem erfindungsgemäßen Verfahren wird nämlich zum Programmierzeitpunkt in der Software lediglich eine eine allgemeine Automatisierungsanlage beschreibende Modellstrukturdarstellung vorgesehen, die erst bei der Inbetriebnahme der Automatisierungsanlage an die spezifische Automatisierungsanlage automatisch angepasst wird.

Mit anderen Worten wird eine allgemeine Steuersoftware bereitgestellt, die ein auf den Aufbau verschiedener Automatisierungsanlagen zutreffendes Modell enthält, das bei der Inbetriebnahme einer speziellen Anlage selbständig - also ohne manuelle Einstellungen - an deren Aufbau bzw. deren Struktur angepasst wird.

Ein weiterer Vorteil des erfindungsgemäßen Verfahrens besteht darin, dass auf diese Weise eine allgemeine Steuersoftware erstellt werden kann, die sich an eine Vielzahl verschiedener Automatisierungsanlagen anpassen lässt. Eine gesonderte Erstellung je einer Steuersoftware für jede einzelne verschiedener Automatisierungsanlagen entfällt somit.

Aufgrund der eindeutigen Erkennungsschlüssel kann eine Erkennung der mehreren einer gemeinsamen Funktionsgruppe zuordenbaren Komponenten besonders einfach vorgenommen werden, da die Datenverarbeitungseinrichtung hierzu nur die mehrfach vorkommenden Komponenten nach ihren eindeutigen Erkennungsschlüsseln abfragen muss. Mit Hilfe des jeweils eindeutigen Erkennungsschlüssels kann jede Komponente der spezifischen Automatisierungsanlage eindeutig von allen anderen Komponenten unterschieden werden. Erkennungsschlüssel in diesem Sinne können beispielsweise Steckplatznummern, eindeutige Adressen, Komponenten-Identifikationsnummern, innerhalb der spezifischen Automatisierungsanlage einmalig auftretende Komponentennamen sowie Produkt- oder Seriennummern von einzelnen Komponenten sein.

Die elektronische Anfrage kann im Rahmen der Erfindung hierbei auch an eine den jeweiligen Komponenten der spezifischen Automatisierungsanlage übergeordnete gemeinsame Steuereinrichtung - meist ein Softwaremodul - gerichtet sein, das die Rückantwort der jeweiligen Erkennungsschlüssel für den Fall steuert, dass mehr als eine Komponente der entsprechenden Funktionsgruppe zuordenbar ist.

Eine Unterscheidung der entsprechenden Komponenten kann besonders leicht erfolgen, da alle einer Funktionsgruppe zuordenbaren Komponenten der spezifischen Automatisierungsanlage zwar unterschiedliche Werte von Erkennungsschlüsseln besitzen, aber generell denselben Typ eines Erkennungsschlüssels verwenden. Beispielsweise wird hierbei als Erkennungsschlüssel eine Steckplatznummer verwendet, anhand derer die jeweiligen Komponenten eindeutig an ihren unterschiedlichen Erkennungsschlüssel-Werten, also in diesem Fall unterschiedlichen Steckplatznummern, erkannt werden können.

Eine vorteilhafte Weiterbildung des erfindungsgemäßen Verfahrens sieht vor, dass in der Textdatei enthaltene Anweisungen die Datenverarbeitungseinrichtung dazu veranlassen, nur bei ausgewählten Funktionsgruppen zu überprüfen, ob mehrere Komponenten der spezifischen Automatisierungsanlage gemeinsam dieser Funktionsgruppe zuordenbar sind. Auf diese Weise kann die Anpassung der Modellstrukturdarstellung an die Strukturdarstellung der spezifischen Automatisierungsanlage besonders schnell und effizient durchgeführt werden, da bereits im Vorfeld festgelegt werden kann, bei welchen Funktionsgruppen überhaupt eine Zuordnung mehrerer Komponenten der Automatisierungsanlage vorkommen kann. Ein Überprüfen der übrigen Funktionsgruppen durch die Datenverarbeitungseinrichtung entfällt somit.

Weiterhin wird es als eine vorteilhafte Fortbildung des erfindungsgemäßen Verfahrens angesehen, wenn die jeweiligen Komponenten mit der elektronischen Antwort zusätzlich weitere, sie charakterisierende Daten senden. Bei dieser Fortbildung können vorteilhafterweise bereits bei der Inbetriebnahme der spezifischen Automatisierungsanlage spezielle weitere Informationen über die entsprechenden Komponenten der Automatisierungsanlage von der Datenverarbeitungseinrichtung aufgenommen werden. Bei solchen weiteren Informationen kann es sich beispielsweise um eine genauere Beschreibung der entsprechenden Komponente, ihren jeweiligen Status (An, Aus, Fehler) oder beispielsweise die Formate der von dieser Komponente im Betrieb der Automatisierungsanlage an die Datenverarbeitungseinrichtung zu sendenden und zu empfangenden Daten handeln.

Als weitere vorteilhafte Ausgestaltung des erfindungsgemäßen Verfahrens wird angesehen, dass auch bei einer solchen Funktionsgruppe, der eine einzige Komponente zuordenbar ist, diese Komponente ermittelt und unter Vervollständigung der die spezifische Automatisierungsanlage beschreibenden Strukturdarstellung in die Modellstrukturdarstellung eingetragen wird. Auf diese Weise kann bereits innerhalb der oben beschriebenen Inbetriebnahme die gesamte Automatisierungsanlage mit allen Komponenten erkannt und in die Strukturdarstellung eingetragen werden. Gemäß dieser Weiterbildung werden also zusätzlich auch solche Komponenten, die als einzige einer bestimmten Funktionsgruppe der Modellstrukturdarstellung zugeordnet werden können, erkannt und in die Modellstrukturdarstellung eingetragen.

Besonders vorteilhaft können die jeweiligen Komponenten der spezifischen Automatisierungsanlage von der Datenverarbeitungseinrichtung angesprochen und erkannt werden, wenn eine Adressierung der jeweiligen Komponenten der spezifischen Automatisierungsanlage seitens der Datenverarbeitungseinrichtung mittels eines zumindest eine Kennzeichnung der jeweiligen Komponente enthaltenden Komponenten-Pfades erfolgt.

Ferner wird als vorteilhaft angesehen, wenn von der Datenverarbeitungseinrichtung zur Ermittlung von Informationen, die einer Komponente einer Funktionsgruppe typisch oder mehreren Komponenten einer Funktionsgruppe gemeinsam sind, aus dem entsprechenden Komponenten-Pfad ein die entsprechende Funktionsgruppe angebender Typ-Pfad erzeugt wird, und die Datenverarbeitungseinrichtung unter Verwendung dieses Typ-Pfads aus der Textdatei die Informationen der entsprechenden Funktionsgruppe ausliest.

Besonders einfach kann ein die entsprechende Funktionsgruppe angebender Typ-Pfad von der Datenverarbeitungseinrichtung erzeugt werden, wenn die Datenverarbeitungseinrichtung zum Erzeugen des Typ-Pfads aus dem Komponenten-Pfad die zumindest eine Kennzeichnung der jeweiligen Komponente aus dem Komponenten-Pfad unter Bildung des Typ-Pfads entfernt.

Als besonders vorteilhaft wird es in diesem Zusammenhang ferner angesehen, dass zur Formulierung des Komponenten-Pfads und des Typ-Pfads die Sprache X-Path verwendet wird. Bei der Sprache X-Path handelt es sich um eine von dem internationalen Standardisierungsgremium W3C normierte Sprache zur Navigation und Adressierung insbesondere in XML-Dokumenten. Nähere Informationen zu X-Path finden sich unter http://www.w3.org/TR/xpath.

Eine weitere vorteilhafte Ausführungsform des erfindungsgemäßen Verfahrens sieht ferner vor, dass die die spezifische Automatisierungsanlage beschreibende Strukturdarstellung von der Datenverarbeitungseinrichtung in eine grafische Darstellung umgewandelt wird. Mittels einer solchen grafischen Darstellung kann von einem Bediener der Automatisierungsanlage ein schneller und umfassender Überblick über die gesamte Automatisierungsanlage gewonnen werden.

Besonders vorteilhaft wird in diesem Zusammenhang angesehen, wenn die auf der Strukturdarstellung beruhende grafische Darstellung mittels einer zu der Datenverarbeitungseinrichtung gehörenden Benutzereinrichtung angezeigt wird. Hierbei kann ein Bediener des Automatisierungssystems besonders vorteilhaft beispielsweise mittels einer an einen zentralen Rechner der Datenverarbeitungseinrichtung angeschlossenen Benutzereinrichtung, wie z.B. einer Bedienstation oder einem Laptop, einen Überblick über den genauen Aufbau der spezifischen Automatisierungsanlage gewinnen.

Hierbei kann es ferner vorteilhaft sein, wenn die Strukturdarstellung mittels einer Browsereinrichtung der Benutzereinrichtung in die grafische Darstellung umgewandelt und angezeigt wird. Auf diese Weise kann z.B. in einer internetbasierten Automatisierungsanlage besonders einfach ein Zugriff von einer Benutzereinrichtung auf die grafische Darstellung der Struktur der spezifischen Automatisierungsanlage erlangt werden, weil mit einer Browsereinrichtung ein weitgehend hardware- und betriebssystemunabhängiger Zugriff erfolgen kann.

Als besonders vorteilhaft wird ferner angesehen, dass für die die Modellstrukturdarstellung wiedergebende Textdatei XML verwendet wird. Das XML-Format (Extended Markup Language) eignet sich insbesondere gut zur Beschreibung hierarchisch strukturierter Systeme. Daher kann es besonders vorteilhaft auch zur Darstellung eines üblicherweise hierarchisch strukturierten Aufbaus einer Automatisierungsanlage eingesetzt werden. Das XML-Format ist ferner systemunabhängig, kann also Datenverarbeitungseinrichtungen verschiedener Betriebssysteme und mit unterschiedlichen Programmiersprachen bearbeitet werden.

Zur näheren Erläuterung des erfindungsgemäßen Verfahrens sind in
- Figur 1: eine schematische Darstellung einer Automatisierungsanlage in einem Blockschaltbild, in
- Figur 2: ein Ausführungsbeispiel einer eine spezifische Automatisierungsanlage beschreibenden Strukturdarstellung, in
- Figur 3: ein Ausführungsbeispiel einer eine allgemeine Automatisierungsanlage beschreibenden Modellstrukturdarstellung und in
- Figur 4: ein Ausführungsbeispiel einer Benutzeranzeige für die Bedienung einer Automatisierungsanlage
gezeigt.

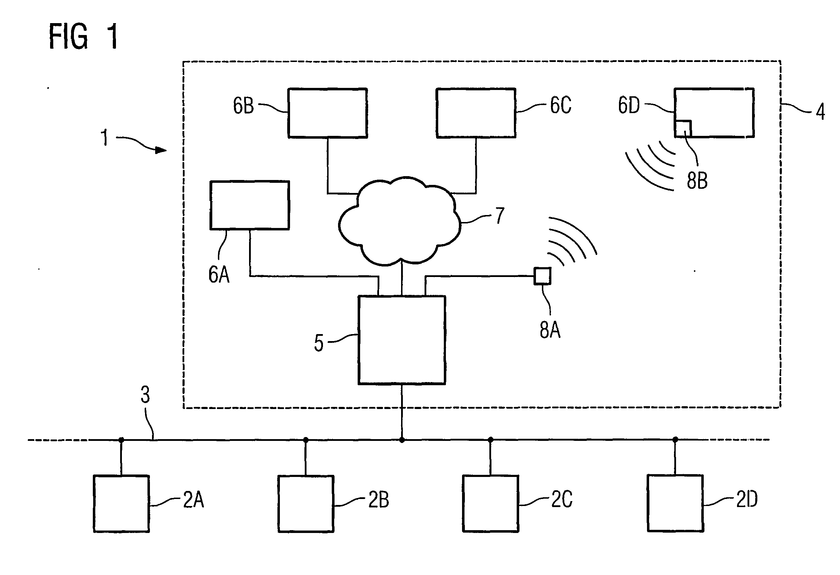

Figur 1 zeigt beispielhaft in einer Art Blockschaltbild einen möglichen Aufbau einer Automatisierungsanlage 1. An einem in Figur 1 nicht dargestellten automatisierten Prozess befinden sich Feldgeräte 2A bis 2D, die über ebenfalls in Figur 1 nicht dargestellte Sensoren und/oder Wandler mit dem automatisierten Prozess verbunden sind. Bei dem Prozess kann es sich beispielsweise um einen verfahrenstechnischen Prozess oder um einen automatisierten Herstellungsprozess handeln. Im Folgenden soll jedoch davon ausgegangen werden, dass es sich bei dem Prozess um eine Energieversorgungsanlage, beispielsweise ein Energieversorgungsnetz, handelt. In diesem Fall handelt es sich bei den mit der Energieversorgungsanlage verbundenen Feldgeräten beispielsweise um Leit- und Steuergeräte oder um elektrische Schutzgeräte zur Überwachung und zum Schutz des Energieversorgungsnetzes. Die Feldgeräte 2A bis 2D liefern über ein Bussystem 3 Messdaten des Prozesses, beispielsweise Spannungs- und Strommesswerte, an eine Datenverarbeitungseinrichtung 4. Gemäß Figur 1 umfasst die Datenverarbeitungseinrichtung 4, die zur Steuerung der Automatisierungsanlage 1 eingerichtet ist, einen zentralen Rechner 5 sowie Benutzereinrichtungen 6A bis 6D, die über verschiedene Möglichkeiten mit dem zentralen Rechner 5 kommunizieren. So ist etwa die Benutzereinrichtung 6A, bei der es sich beispielsweise um eine lokale Bedienstation handeln kann, direkt fest mit dem zentralen Rechner 5 verdrahtet. Die Benutzereinrichtungen 6B und 6C, z.B. Büro- oder Leitwartenrechner, sind über ein Netzwerk 7, beispielsweise das Internet oder ein Intranet, mit dem zentralen Rechner 5 verbunden, und die Benutzereinrichtung 6D, z.B. ein Laptop, ist drahtlos über kombinierte Sende- und Empfangseinrichtungen 8A und 8B mit dem zentralen Rechner 5 verbunden.

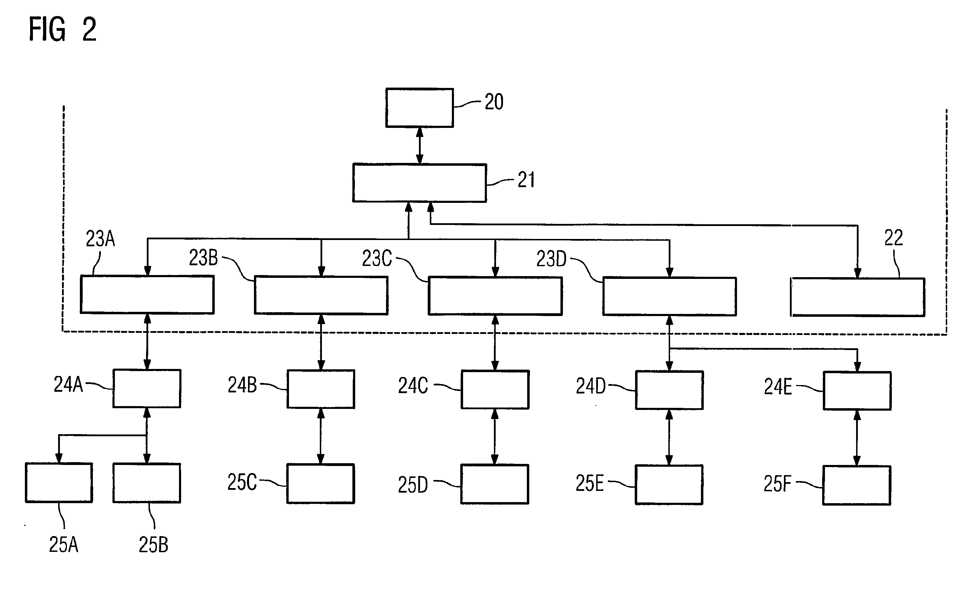

Figur 2 zeigt in einer Baumstruktur ein Ausführungsbeispiel eines Aufbaus einer solchen (spezifischen) Automatisierungsanlage mit mehreren Komponenten. Eine zentrale Prozessoreinheit (CPU) 20, die beispielsweise in dem zentralen Rechner 5 gemäß Figur 1 enthalten sein kann, steuert hierbei zunächst eine Gesamttreibereinrichtung 21, mit der beispielsweise die Kommunikation zwischen der CPU 20 und den restlichen Komponenten der Automatisierungsanlage geregelt wird. Von dem Gesamttreiber 21 ist zudem ein Informationsblock 22 abrufbar. Beispielsweise können in dem Informationsblock 22 enthaltene Informationen eine Versionsnummer und ein Erstellungsdatum des Gesamttreibers 21 enthalten. Der Gesamttreiber 21 wiederum steuert gemäß Figur 2 vier sogenannte Einzeltreiber 23A bis 23D, denen wiederum bestimmte Geräte 24A bis 24E untergeordnet sind. Man erkennt, dass dem vierten Einzeltreiber 23D an dieser Stelle zwei Geräte 24D und 24E zugeordnet sind. In einer folgenden Strukturebene sind den Geräten 24A bis 24E schließlich mit dem Prozess verbundene Sensoren 25A bis 25F untergeordnet.

In Figur 2 erkennt man ferner, dass die meisten Komponenten der in Figur 1 gezeigten spezifischen Automatisierungsanlage bestimmten Blöcken in der Strukturdarstellung gemäß Figur 2 entsprechen. Einige Blöcke in Figur 2 stellen dabei gegenständliche Komponenten der spezifischen Automatisierungsanlage dar, beispielsweise Geräte 24A bis 24E bzw. Sensoren 25A bis 25F. Andere stellen Softwarekomponenten dar, beispielsweise Einzeltreiber 23A bis 23D oder der Gesamttreiber 21. Der Informationsblock 22 hat keine eigentliche Abbildung in der spezifischen Automatisierungsanlage und dient hierbei lediglich zur Strukturierung von Daten und Informationen innerhalb der Strukturdarstellung und dient damit deren besserer Übersichtlichkeit. Die genannten Softwarekomponenten sowie der Informationsblock 22 werden üblicherweise auf der Datenverarbeitungseinrichtung 4 (vgl. Figur 1) ausgebildet sein, was in Figur 2 durch einen strichlierten Rahmen angedeutet ist.

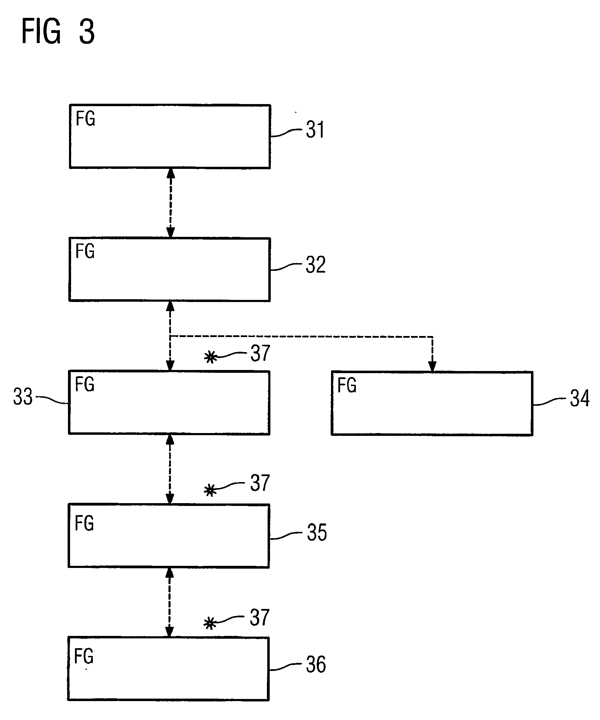

Für den Betrieb der Automatisierungsanlage ist es notwendig, dass für eine Steuersoftware der in Figur 1 gezeigten Datenverarbeitungseinrichtung 4 eine solche Strukturdarstellung der spezifischen Automatisierungsanlage mit ihren entsprechenden Komponenten vorliegt. Erfindungsgemäß wird eine solche Strukturdarstellung aus einer Modellstrukturdarstellung, wie sie beispielsweise in Figur 3 dargestellt ist, gewonnen.

In Figur 3 ist eine solche Modellstrukturdarstellung beispielhaft gezeigt, die allgemein auf eine Vielzahl von Automatisierungsanlagen angewandt werden kann. Hierbei sind anstelle einzelner Komponenten einer speziellen Automatisierungsanlage lediglich deren Funktionsgruppen, also sozusagen Klassen von Komponenten einer fiktiven Automatisierungsanlage gezeigt. Dies ist in der Darstellung gemäß Figur 3 durch die Abkürzung "FG" in der linken oberen Ecke jedes einzelnen Blockes gekennzeichnet. Gemäß Figur 3 befindet sich auf der obersten Strukturebene eine Funktionsgruppe (FG) CPU 31, die einer FG "Gesamttreiber" 32 übergeordnet ist. Die FG "Gesamttreiber" 32 ist wiederum parallel zueinander angeordneten Funktionsgruppen "Einzeltreiber" 33 und "Information" 34 übergeordnet. Der FG "Einzeltreiber" 33 ist schließlich eine FG "Gerät" 35 und dieser eine FG "Sensor" 36 untergeordnet. Mit einer derartigen Modellstrukturdarstellung lässt sich allgemein der Aufbau einer Vielzahl von Automatisierungsanlagen beschreiben.

Um aus der Modellstrukturdarstellung gemäß Figur 3 eine Strukturdarstellung einer spezifischen Automatisierungsanlage beispielsweise analog zu Figur 2 zu generieren, muss insbesondere an den in Figur 3 durch Sterne 37 gekennzeichneten Stellen die wahre Anzahl von den jeweiligen Funktionsgruppen zuordenbaren Komponenten ermittelt werden. Beispielsweise können der Funktionsgruppe "Einzeltreiber" mehrere Einzeltreiberkomponenten einer spezifischen Automatisierungsanlage zugeordnet werden. Zudem müssen die einzelnen Komponenten der spezifischen Automatisierungsanlage in die Modellstrukturdarstellung eingetragen werden, um daraus eine entsprechende Strukturdarstellung zu gewinnen.

Die hierzu anzuwendende Vorgehensweise soll im Folgenden näher beschrieben werden:

Zum Anpassen einer Steuersoftware an eine spezifische Automatisierungsanlage wird zunächst eine Modellstrukturdarstellung, beispielsweise gemäß Figur 3, in Form einer Textdatei benötigt. Besonders komfortabel lässt sich eine solche Textdatei im XML-Format (Extended Markup Language) erstellen, da sich mit XML besonders gut hierarchisch strukturierte Systeme beschreiben lassen. Ein Beispiel für eine solche Textdatei in einer gekürzten XML-Fassung ist im Folgenden angegeben:
- 1: <CPU>
- 2: <Gesamttreiber>
- 3: <Information>
- 4: <Treibernummer Typ = "int" />
- 5: <Erstelldatum Typ = "string" />
- 6: </Information>
- 7: <Einzeltreiber ResolveCardinalities = "true" Key = "TreiberNr">
- 8: <Status Typ = "string" />
- 9: <Bezeichnung Typ = "string" />
- 10: <Geraet ResolveCardinalities = "true" Key = "GeraeteNr">
- 11: <Status Typ = "string" />
- 12: <Bezeichnung Typ = "string" />
- ::
- ::
- ::
- ::
- 21: <Sensor ResolveCardinalities = "true" Key = "SensorNr">
- ::
- ::
- ::
- 31: </Sensor>
- 32: </Geraet>
- 33: </Einzeltreiber>
- 34: </Gesamttreiber>
- 35: </CPU>

Mit einer solchen Textdatei lässt sich die in Figur 3 gezeigte Modellstrukturdarstellung beschreiben. Man erkennt in der Textdatei beispielsweise die einzelnen Funktionsgruppen "CPU", "Gesamttreiber", "Information", usw., denen bei Bedarf weitere Daten zugeordnet sind. Beispielsweise können in der Funktionsgruppe "Information" eine Treibernummer oder ein Erstelldatum angebende Daten enthalten sein. Dies ist in Zeilen 4 und 5 der gezeigten Textdatei aufgeführt. Zusätzlich ist jeweils noch der verwendete Datentyp angegeben, beispielsweise wird für die Treibernummer der Datentyp "integer" (int) verwendet, das Erstelldatum liegt im Typ "string" vor. Ferner erkennt man in Zeile 7 der Textdatei die Anweisung "ResolveCardinalities = true", was bedeutet, dass an dieser Stelle der Funktionsgruppe "Einzeltreiber" nicht nur eine einzelne Komponente, sondern mehrere Einzeltreiberkomponenten der spezifischen Automatisierungsanlage gemeinsam zuordenbar sein könnten. Zur Unterscheidung der einzelnen Einzeltreiberkomponenten der spezifischen Automatisierungsanlage wird mit dem Ausdruck Key = "TreiberNr" beispielsweise die Adressierungs-Nummer einer Einzeltreiberkomponente als eindeutiger Erkennungsschlüssel festgelegt. Analoges gilt für die Funktionsgruppen "Geraet" und "Sensor" mit den Erkennungsschlüsseln Gerätenummer (GeraeteNr) und Sensornummer (SensorNr).

Eine solchermaßen oder ähnlich ausgeführte Textdatei muss der Datenverarbeitungseinrichtung, die die spezifische Automatisierungsanlage steuert, zur Verfügung gestellt werden. Beispielsweise wird sie an die Datenverarbeitungseinrichtung übertragen, nachdem sie an einem Programmierarbeitsplatz erstellt wurde. Vorteilhaft bei der Verwendung einer solchen Modellstrukturdarstellung ist jedoch insbesondere, dass eine einzige Modellstrukturdarstellung in Form einer Textdatei mehrfach kopiert und für mehrere Automatisierungsanlagen verwendet werden kann. Der Entwicklungs- und Programmieraufwand im Vorfeld verringert sich somit deutlich.

Mittels der Datenverarbeitungseinrichtung der spezifischen Automatisierungsanlage muss die Modellstrukturdarstellung daraufhin in eine an die spezielle Automatisierungsanlage angepasste Strukturdarstellung überführt werden. Hierzu prüft die Datenverarbeitungseinrichtung die Textdatei beispielsweise auf Anweisungen wie "ResolveCardanalities = true", um diejenigen Stellen zu ermitteln, an denen mehrfach einer Funktionsgruppe zuordenbare Komponenten existieren können. An diesen Stellen werden in der spezifischen Automatisierungsanlage von der Datenverarbeitungseinrichtung die entsprechenden Komponenten abgefragt, beispielsweise indem die Datenverarbeitungseinrichtung eine elektronische Anfrage aussendet, in der der jeweilige Typ eines gesuchten Erkennungsschlüssels für die spezielle Funktionsgruppe enthalten ist. Auf diese elektronische Anfrage antworten jeweils die dieser Funktionsgruppe zuordenbaren Komponenten, indem sie ihre Erkennungsschlüssel, z.B. ihre Gerätenummer, als elektronische Antwort an die Datenverarbeitungseinrichtung schicken.

Alternativ ist es auch möglich, dass allen oder einigen gleichartigen Komponenten der spezifischen Automatisierungsanlage eine gemeinsame Steuereinrichtung übergeordnet ist, die die elektronische Anfrage empfängt und die Antworten der jeweiligen Komponenten an die Datenverarbeitungseinrichtung koordiniert.

Gemeinsam mit dem Erkennungsschlüssel können beispielsweise auch weitere die jeweilige Komponente charakterisierende Daten gesendet werden, wie etwa eine genauere Bezeichnung der Komponente oder der Status der Komponente (z.B. An, Aus, Fehler). Die Datenverarbeitungseinrichtung trägt die zurückerhaltenen Komponenten anhand ihrer Erkennungsschlüssel in die Textdatei ein und prüft analog die weiteren Strukturebenen der Textdatei ab.

An allen Stellen, an denen sich Anweisungen finden, die spezifische Automatisierungsanlage auf mehrere gemeinsam einer Funktionsgruppe zuordenbare Komponenten zu überprüfen, führt die Datenverarbeitungseinrichtung das eben beschriebene Verfahren durch. Auf diese Weise werden alle gemeinsam je einer Funktionsgruppe zuordenbaren Komponenten der Automatisierungsanlage in die Textdatei aufgenommen, so dass letztendlich eine Strukturdarstellung der spezifischen Automatisierungsanlage, ebenfalls in Textform, entsteht, wie sie als Beispiel wiederum in gekürzter Fassung und im XML-Format folgend angegeben ist:
- 1: <CPU>
- 2: <Gesamttreiber>
- ::
- ::
- ::
- 11: <Einzeltreiber Key = "TreiberNr" TreiberNr = "100">
- ::
- ::
- ::
- 21: <Geraet Key = "GeraeteNr" GeraeteNr = "1">
- ::
- ::
- ::
- 31: <Sensor Key = "SensorNr" SensorNr = "1001">
- ::
- ::
- ::
- 41: </Sensor>
- 42: <Sensor Key = "SensorNr" SensorNr = "1002">
- ::
- ::
- ::
- 51: </Sensor>
- 52: </Geraet>
- 53: 53 <Geraet Key = "GeraeteNr" GeraeteNr = "2">
- ::
- ::
- ::
- 61: </Geraet>
- ::
- ::
- :: /Einzeltreiber>
- 71: </Gesamttreiber>
- 72: </CPU>

An der gezeigten Strukturdarstellung der spezifischen Automatisierungsanlage im Textformat erkennt man, dass beispielsweise unterhalb der Funktionsgruppe "Gesamttreiber" einzelne Komponenten, wie beispielsweise ein Einzeltreiber mit der Treibernummer 100, eingetragen sind. Dem Einzeltreiber mit der TreiberNr 100 sind gemäß der gezeigten Strukturdarstellung Geräte mit den Gerätenummern (GeraeteNr) 1 und 2 untergeordnet. Weitere Geräte können analog aufgeführt sein. Dem Gerät mit der GeraeteNr 1 wiederum sind Sensoren mit den Sensornummern 1001 und 1002 untergeordnet. Die erläuterte Struktur entspricht beispielsweise dem in Figur 2 gezeigten linken Ast der Baumstruktur der spezifischen Automatisierungsanlage mit dem ersten Einzeltreiber 23A, dem ersten Gerät 24A und den Sensoren 25A und 25B. Die übrigen Äste der in Figur 2 gezeigten Strukturdarstellung können analog in die Strukturdarstellung im Textformat übernommen werden.

Zusätzlich zu den jeweiligen Erkennungsschlüsseln wie Treibernummern, Produktnummern und Sensornummern der einzelnen erkannten Komponenten können auch weitere, die Komponenten beschreibenden Daten in die Strukturdarstellung aufgenommen werden. So können hier beispielsweise einen Status der jeweiligen Komponente angebende Informationen sowie eine genauere Bezeichnung der Komponente enthalten sein.

Zusätzlich zu solchen Komponenten, die gemeinsam einer Funktionsgruppe der Modellstrukturdarstellung zuordenbar sind, können in demselben Ablauf auch die übrigen Komponenten der spezifischen Automatisierungsanlage in die Modellstrukturdarstellung unter Bildung einer ergänzten Strukturdarstellung der spezifischen Automatisierungsanlage eingetragen werden. Bei diesen Komponenten findet somit eine Zuordnung von genau einer Komponente zu genau einer Funktionsgruppe statt. Dies gilt beispielsweise gemäß den Figuren 2 und 3 für die CPU 20 und die Funktionsgruppe "CPU" 31. Die Erfassung dieser übrigen Komponenten kann analog zu der beschriebenen Vorgehensweise mit einer elektronischen Anfrage von der Datenverarbeitungseinrichtung und einer entsprechenden elektronischen Antwort der jeweiligen Komponente geschehen, wobei beispielsweise ein Wert eines Erkennungsschlüssels der jeweiligen Komponente an die Datenverarbeitungseinrichtung übermittelt und in die Modellstrukturdarstellung eingetragen wird. Analog zu dem oben beschriebenen Verfahren können auch hier zusätzlich zu den Erkennungsschlüsseln weitere die jeweilige Komponente kennzeichnende Daten gesendet werden. Auf diese Weise erhält man schließlich aus der Modellstrukturdarstellung eine vollständige Strukturdarstellung der spezifischen Automatisierungsanlage mit allen vorhandenen Komponenten.

Um eine Komponente der spezifischen Automatisierungsanlage zu bezeichnen und gegebenenfalls Informationen oder Messdaten von dieser abzufragen oder an diese zu übertragen, muss die Datenverarbeitungseinrichtung eine eindeutige Adressierung für die jeweilige Komponente verwenden. Hierbei bietet sich die Verwendung von sogenannten Komponentenpfaden - oder auch Instanzpfaden - an, in denen, ähnlich der Form, die von bekannten Büro- und Heimcomputerbetriebssystemen verwendet werden, die jeweiligen Komponenten durch Querstriche getrennt aufgeführt werden. Wichtig ist, dass zur Adressierung einer speziellen Komponente der spezifischen Automatisierungsanlage zusätzlich auch die jeweiligen für die gesuchte Komponente eindeutigen Erkennungsschlüssel in den Komponenten- bzw. Instanzpfad aufgenommen werden.

Im Folgenden ist ein Beispiel eines Komponentenpfades zur Adressierung des ersten Gerätes 24A (vgl. Figur 2) und zur Abfrage von dessen Status gezeigt:
"CPU/Gesamttreiber/Einzeltreiber['TreiberNr=100']/Geraet['GeraeteNr=1']/Status"

Die Organisation und Navigation mit Hilfe solcher Pfade kann beispielsweise mit der von dem Standardisierungsgremium W3C normierten Sprache X-Path besonders komfortabel erfolgen. Weitere Informationen zu X-Path lassen sich im Internet unter der URL http://www.w3.org/TR/xpath abrufen.

Ferner kann es von Vorteil sein, nicht nur eine spezielle Komponente unter Verwendung eines entsprechenden Komponenten-Pfades anzusprechen, sondern allgemeine Informationen über deren jeweilige Funktionsgruppe zu erhalten. Diese Informationen sind in der Modellstrukturdarstellung enthalten. Informationen über eine Funktionsgruppe können beispielsweise sogenannte Metadaten sein, die einen Datentyp angeben, in dem Daten von der jeweiligen Funktionsgruppe zugeordneten Komponenten der spezifischen Automatisierungsanlage empfangen oder gesendet werden können. Bei Verwendung eines Komponenten-pfades wie oben angegeben lässt sich besonders einfach ein sogenannter Typpfad zum Abrufen solcher Informationen über die einzelnen Funktionsgruppen erzeugen. Hierzu müssen nämlich einfach alle jeweils die speziellen Erkennungsschlüssel von Komponenten der spezifischen Automatisierungsanlage enthaltenden Teile des Komponentenpfades entfernt werden; bei dem obigen Beispiel verbleibt als Typpfad etwa:
"CPU/Gesamttreiber/Einzeltreiber/Geraet/Status"

Mit Hilfe dieses Typpfades lässt sich nun eine allgemeine Information über beispielsweise das Dateiformat abfragen, in dem der Status der einzelnen der Funktionsgruppe "Geräte" zugeordneten Komponenten ausgegeben wird. Dieser angegebene Typpfad verweist beispielsweise auf Zeile 11 der oben angegebenen Textdatei, in der als Datentyp für den Status der Funktionsgruppe "Geraet" der Typ "string" angegeben ist.

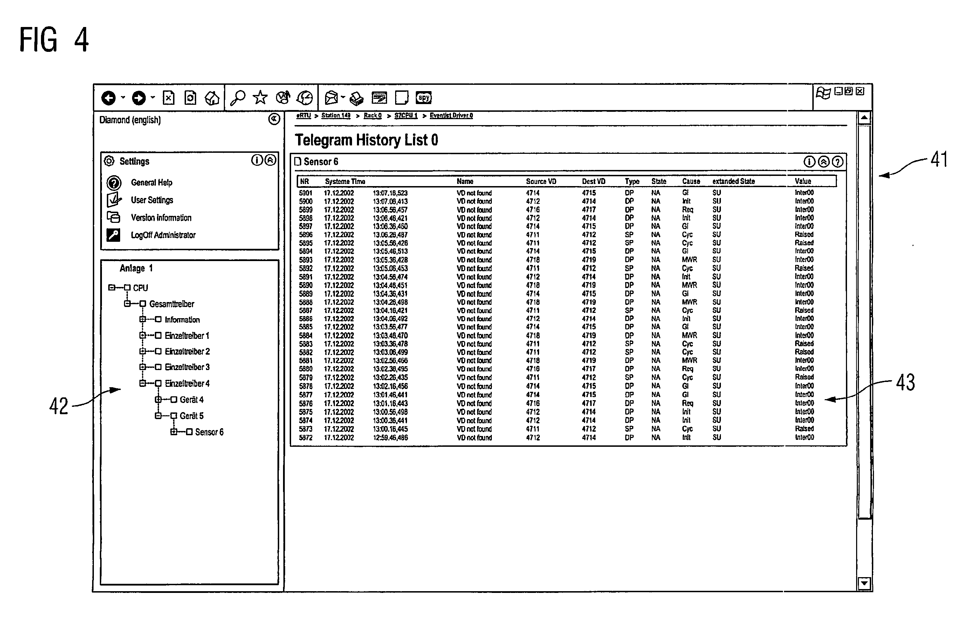

Mit Hilfe der so erzeugten Strukturdarstellung der spezifischen Automatisierungsanlage kann auch ein Bediener der Automatisierungsanlage sehr einfach auf spezielle Komponenten der Automatisierungsanlage zugreifen. Dazu kann beispielsweise eine Anzeigeeinrichtung oder ein externer Computer mit einer Anzeigeeinrichtung mit dem zentralen Rechner der Datenverarbeitungseinrichtung verbunden sein und beispielsweise in einem Browserfenster, wie es beispielhaft in Figur 4 gezeigt ist, die Navigation in der Automatisierungsanlage ermöglichen.

Figur 4 zeigt ein Browserfenster 41, in dem neben anderen Informationen insbesondere eine Strukturdarstellung der spezifischen Automatisierungsanlage ("Anlage 1") in einer grafischen Darstellung beispielhaft als Strukturbaum 42 gezeigt ist. Mit Hilfe einer solchen (grafischen) Strukturdarstellung der spezifischen Automatisierungsanlage kann ein Bediener des Automatisierungssystems beispielsweise - wie durch den Strukturbaum 42 angegeben - auf den sechsten Sensor (vgl. 25F in Figur 2) zugreifen und bestimmte Informationen, wie beispielsweise Messwerte oder Statuswerte, des Sensors abrufen. Diese können dann beispielsweise in einem weiteren Fenster 43 in Form einer Tabelle angezeigt werden. Die grafische Darstellung einer solchen die spezifische Automatisierungsanlage beschreibenden Strukturdarstellung lässt sich vergleichsweise einfach aus einer XML-Datei, wie sie oben angegeben ist, erzeugen. Diese kann entweder von dem zentralen Rechner der Datenverarbeitungseinrichtung direkt umgewandelt werden oder beispielsweise von der Browsereinrichtung eines an den zentralen Rechner der Datenverarbeitungseinrichtung angeschlossenen Benutzercomputers.

## Patentansprüche

1. Verfahren zum automatischen Erzeugen einer eine spezifische Automatisierungsanlage (1) beschreibenden Strukturdarstellung aus einer eine allgemeine Automatisierungsanlage beschreibenden Modellstrukturdarstellung, wobei die Modellstrukturdarstellung eine strukturierte Darstellung von Funktionsgruppen (FG) der allgemeinen Automatisierungsanlage und deren Verknüpfungen untereinander aufweist und jeder Funktionsgruppe (FG) eine oder mehrere Komponenten der spezifischen Automatisierungsanlage (1) zuordenbar sind,
**gekennzeichnet durch** die folgenden Schritte:
- Bereitstellen einer die Modellstrukturdarstellung wiedergebenden Textdatei für eine die spezifische Automatisierungsanlage (1) steuernde Datenverarbeitungseinrichtung (4), wobei die Textdatei Informationen über die in der Modellstrukturdarstellung enthaltenen Funktionsgruppen (FG) enthält und der Datenverarbeitungseinrichtung (4) zur Verfügung gestellt wird;
- Ermitteln derjenigen Komponenten der spezifischen Automatisierungsanlage (1) **durch** die Datenverarbeitungseinrichtung (4), die gemeinsam einer Funktionsgruppe (FG) der Modellstrukturdarstellung zuordenbar sind, indem
- die Datenverarbeitungseinrichtung (4) eine elektronische Anfrage an die jeweils einer Funktionsgruppe (FG) zugeordneten Komponenten oder eine diesen übergeordnete gemeinsame Steuereinrichtung sendet und
- die jeweiligen Komponenten oder die diesen übergeordnete gemeinsame Steuereinrichtung auf diese elektronische Anfrage eine elektronische Antwort an die Datenverarbeitungseinrichtung (4) mit einem für sie jeweils eindeutigen Erkennungsschlüssel senden, wobei jeweils einer Funktionsgruppe (FG) der Modellstrukturdarstellung gemeinsam zuordenbare Komponenten der spezifischen Automatisierungsanlage (1) beim Senden der elektronischen Antwort Erkennungsschlüssel desselben Typs verwenden;
und
- Eintragen der ermittelten Komponenten mittels der Datenverarbeitungseinrichtung (4) anhand ihrer Erkennungsschlüssel in die Textdatei unter Erzeugen der die spezifische Automatisierungsanlage (1) beschreibenden Strukturdarstellung.

2. Verfahren nach Anspruch 1, **dadurch gekennzeichnet, dass**
- in der Textdatei enthaltene Anweisungen die Datenverarbeitungseinrichtung (4) dazu veranlassen, nur bei ausgewählten Funktionsgruppen (FG) zu überprüfen, ob mehrere Komponenten der spezifischen Automatisierungsanlage (1) gemeinsam dieser Funktionsgruppe (FG) zuordenbar sind.

3. Verfahren nach Anspruch 1 oder 2, **dadurch gekennzeichnet, dass**
- die jeweiligen Komponenten mit der elektronischen Antwort zusätzlich weitere sie charakterisierende Daten senden.

4. Verfahren nach einem der vorangehenden Ansprüche, **dadurch gekennzeichnet, dass**
- auch bei einer solchen Funktionsgruppe (FG), der eine einzige Komponente zuordenbar ist, diese Komponente ermittelt und unter Vervollständigung der die spezifische Automatisierungsanlage (1) beschreibenden Strukturdarstellung in die Modellstrukturdarstellung eingetragen wird.

5. Verfahren nach einem der vorangehenden Ansprüche, **dadurch gekennzeichnet, dass**
- eine Adressierung der jeweiligen Komponenten der spezifischen Automatisierungsanlage (1) seitens der Datenverarbeitungseinrichtung (4) mittels eines zumindest eine Kennzeichnung der jeweiligen Komponente enthaltenden Komponenten-Pfades erfolgt.

6. Verfahren nach Anspruch 5, **dadurch gekennzeichnet, dass**
- von der Datenverarbeitungseinrichtung (4) zur Ermittlung von Informationen, die einer Komponente einer Funktionsgruppe (FG) typisch oder mehreren Komponenten einer Funktionsgruppe (FG) gemeinsam sind, aus dem entsprechenden Komponenten-Pfad ein die entsprechende Funktionsgruppe (FG) angebender Typ-Pfad erzeugt wird, und
- die Datenverarbeitungseinrichtung (4) unter Verwendung dieses Typ-Pfads aus der Textdatei die Informationen der entsprechenden Funktionsgruppe (FG) ausliest.

7. Verfahren nach Anspruch 6, **dadurch gekennzeichnet, dass**
- die Datenverarbeitungseinrichtung (4) zum Erzeugen des Typ-Pfads aus dem Komponenten-Pfad die zumindest eine Kennzeichnung der jeweiligen Komponente aus dem Komponenten-Pfad unter Bildung des Typ-Pfads entfernt.

8. Verfahren nach einem der Ansprüche 6 oder 7, **dadurch gekennzeichnet, dass**
- zur Formulierung des Komponenten-Pfads und des Typ-Pfads die Sprache Xpath verwendet wird.

9. Verfahren nach einem der vorangehenden Ansprüche, **dadurch gekennzeichnet, dass**
- die die spezifische Automatisierungsanlage (1) beschreibende Strukturdarstellung von der Datenverarbeitungseinrichtung (4) in eine grafische Darstellung umgewandelt wird.

10. Verfahren nach Anspruch 9, **dadurch gekennzeichnet, dass**
- die auf der Strukturdarstellung beruhende grafische Darstellung mittels einer zu der Datenverarbeitungseinrichtung (4) gehörenden Benutzereinrichtung (6A bis 6D) angezeigt wird.

11. Verfahren nach Anspruch 9 oder 10, **dadurch gekennzeichnet, dass**
- die Strukturdarstellung mittels einer Browsereinrichtung der Benutzereinrichtung (6A bis 6D) in die grafische Darstellung umgewandelt und angezeigt wird.

12. Verfahren nach einem der vorangehenden Ansprüche, **dadurch gekennzeichnet, dass**
- für die die Modellstrukturdarstellung wiedergebende Textdatei XML verwendet wird.

## Claims

1. Method for automatically generating a structure representation which describes a specific automation system (1) from a model structure representation which describes a general automation system, where the model structure representation has a structured representation of functional groups (FG) in the general automation system and their links to one another, and each functional group (FG) can be assigned one or more components of the specific automation system (1), **characterized by** the following steps:
- a text file reproducing the model structure representation is provided for a data processing device (4) which controls the specific automation system (1), the text file containing information about the functional groups (FG) contained in the model structure representation and being provided for the data processing device (4);
- those components of the specific automation system (1) which can be jointly assigned to a functional group (FG) in the model structure representation are ascertained by the data processing device (4) by virtue of
- the data processing device (4) sending an electronic query to the components assigned to a respective functional group (FG) or to a common control device which is superordinate to them, and
- the respective components or the common control device which is superordinate to them responding to this electronic query by sending an electronic response to the data processing device (4) with an identification key which is respectively unique for them, where components of the specific automation system (1) which can each be jointly assigned to a functional group (FG) in the model structure representation use identification keys of the same type when sending the electronic response; and
- the ascertained components are entered into the text file by means of the data processing device (4) using their identification key, to generate the structure representation which describes the specific automation system (1).

2. Method according to claim 1, **characterized in that**
- instructions contained in the text file prompt the data processing device (4) to check only selected functional groups (FG) to determine whether a plurality of components of the specific automation system (1) can be jointly assigned to this functional group (FG).

3. Method according to claim 1 or 2, **characterized in that**
- the respective components additionally send further data characterizing them with the electronic response.

4. Method according to one of the preceding claims, **characterized in that**
- even a functional group (FG) which can be assigned a single component has this component ascertained and entered into the model structure representation to complete the structure representation which describes the specific automation system (1).

5. Method according to one of the preceding claims, **characterized in that**
- the respective components of the specific automation system (1) are addressed by the data processing device (4) using a component path which contains at least one identification for the respective component.

6. Method according to claim 5, **characterized in that**
- the data processing device (4) ascertains information which is typical of a component of a functional group (FG) or which is common to a plurality of components of a functional group (FG) by generating a type path which indicates the relevant functional group (FG) from the relevant component path, and
- the data processing device (4) uses this type path to read the information for the relevant functional group (FG) from the text file.

7. Method according to claim 6, **characterized in that**
- the data processing device (4) generates the type path from the component path by removing the at least one identification for the respective component from the component path to form the type path.

8. Method according to one of claims 6 or 7, **characterized in that**
- the component path and the type path are formulated using the language XPath.

9. Method according to one of the preceding claims, **characterized in that**
- the structure representation which describes the specific automation system (1) is converted into a graphical representation by the data processing device (4).

10. Method according to claim 9, **characterized in that**
- the graphical representation based on the structure representation is displayed using a user device (6A to 6D) which belongs to the data processing device (4).

11. Method according to claim 9 or 10, **characterized in that**
- the structure representation is converted into the graphical representation, and displayed, using a browser device on the user device (6A to 6D).

12. Method according to one of the preceding claims, **characterized in that**
- XML is used for the text file reproducing the model structure representation.

## Revendications

1. Procédé de génération automatique d'une représentation structurelle, décrivant un système d'automatisation spécifique (1), à partir d'une représentation structurelle type décrivant un système d'automatisation général, la représentation structurelle type comportant une représentation structurée de groupes fonctionnels (FG) du système d'automatisation général et leurs combinaisons entre eux et un ou plusieurs composants du système d'automatisation spécifique (1) pouvant être associés à chaque groupe fonctionnel (FG),
**caractérisé par** les étapes suivantes consistant à :
- délivrer un fichier texte, reproduisant la représentation structurelle type et destiné à un dispositif de traitement de données (4) commandant le système d'automatisation spécifique (1), le fichier texte contenant des informations sur les groupes fonctionnels (FG) contenus dans la représentation structurelle type et étant mis à la disposition du dispositif de traitement de données (4) ;
- déterminer, à l'aide du dispositif de traitement de données (4), les composants du système d'automatisation spécifique (1) qui peuvent être associés conjointement à un groupe fonctionnel (FG) de la représentation structurelle type, en ce que
- le dispositif de traitement de données (4) envoie une requête électronique aux composants, associés respectivement à un groupe fonctionnel (FG), ou à un dispositif de commande commun situé à niveau supérieur à celui de ces composants et
- les composants respectifs ou le dispositif de commande commun, situé à niveau supérieur, envoient au dispositif de traitement de données (4), sur cette requête électronique, une réponse électronique comportant une clé d'identification univoque, des composants du système d'automatisation spécifique (1), qui peuvent être associés conjointement à un groupe fonctionnel (FG) de la représentation structurelle type, utilisant des clés d'identification du même type lors de l'envoi de la réponse électronique et
- entrer les composants déterminés au moyen du dispositif de traitement de données (4) en se référant à leur clé d'identification dans le fichier texte et en générant la représentation structurelle décrivant le système d'automatisation spécifique (1).

2. Procédé selon la revendication 1, **caractérisé en ce que**
- les instructions, contenues dans le fichier texte, ordonnent au dispositif de traitement de données (4) de vérifier, seulement auprès de groupes fonctionnels (FG) choisis, si plusieurs composants du système d'automatisation spécifique (1) peuvent être associés conjointement à ce groupe fonctionnel (FG).

3. Procédé selon la revendication 1 ou 2, **caractérisé en ce que**
- les composants respectifs envoient en plus, avec la réponse électronique, d'autres données qui les caractérisent.

4. Procédé selon l'une des revendications précédentes, **caractérisé en ce que**
- même dans un groupe fonctionnel FG) auquel peut être associé un seul composant, ce composant est déterminé et entré dans la représentation structurelle type en complétant la représentation structurelle décrivant le système d'automatisation spécifique (1).

5. Procédé selon l'une des revendications précédentes, **caractérisé en ce que**
- un adressage des composants respectifs du système d'automatisation spécifique (1) est effectué du côté du dispositif de traitement de données (4) au moyen d'un chemin de composants contenant au moins un identifiant des composants respectifs.

6. Procédé selon la revendication 5, **caractérisé en ce que**
- un chemin type, indiquant le groupe fonctionnel (FG) correspondant, est généré à partir du chemin de composants correspondant par le dispositif de traitement de données (4) afin de déterminer des informations qui sont typiques d'un composant d'un groupe fonctionnel (FG) ou qui sont communes à plusieurs composants d'un groupe fonctionnel (FG), et
- le dispositif de traitement de données (4) lit dans le fichier texte les informations du module fonctionnel correspondant (FG) en utilisant ce chemin type.

7. Procédé selon la revendication 6, **caractérisé en ce que**
- le dispositif de traitement de données (4) supprime l'au moins un identifiant du composant respectif du chemin de composants, en formant le chemin type, afin de générer le chemin type à partir du chemin de composants.

8. Procédé selon l'une des revendications 6 ou 7, **caractérisé en ce que**
- l'on utilise le langage Xpath pour formuler le chemin de composants et le chemin type.

9. Procédé selon l'une des revendications précédentes, **caractérisé en ce que**
- la représentation structurelle, décrivant le système d'automatisation spécifique (1), est convertie en une représentation graphique par le dispositif de traitement de données (4).

10. Procédé selon la revendication 9, **caractérisé en ce que**
- la représentation graphique, reposant sur la représentation structurelle, est indiquée au moyen d'un dispositif utilisateur (6A à 6D) appartenant au dispositif de traitement de données (4).

11. Procédé selon la revendication 9 ou 10, **caractérisé en ce que**
- la représentation structurelle est indiquée et convertie en la représentation graphique au moyen d'un dispositif de navigation du dispositif utilisateur (6A à 6D).

12. Procédé selon l'une des revendications précédentes, **caractérisé en ce que**
- l'on utilise XML pour le fichier texte reproduisant la représentation structurelle type.
